# EUROPÄISCHE PATENTANMELDUNG

(11) **EP 4 838 090 A2**
(43) Veröffentlichungstag der Anmeldung: **11.11.2026**
(21) Anmeldenummer: 26196172.6
(22) Anmeldetag: 07.06.2018
(51) Int. Cl.: F03D 7/04

(54) **VERFAHREN UND EINSPEISEVORRICHTUNG ZUM EINSPEISEN ELEKTRISCHER LEISTUNG**

(30) Priorität: 13.06.2017 DE 102017112944
(62) Dokumentnummer(n) der früheren Anmeldung(en) nach Art. 76 EPÜ: 18729427.7 / 3 639 338
(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Die Erfindung betrifft ein Verfahren zum Einspeisen elektrischer Leistung in ein elektrisches Versorgungsnetz (120), an einem Netzanschlusspunkt mittels einer umrichtergeführten Einspeisevorrichtung, nämlich mittels eines Windparks (112) oder einer Windenergieanlage (100), wobei zur Einspeisung der elektrischen Leistung wenigstens zwischen einem stromprägenden Betriebsmodus und einem spannungsprägenden Betriebsmodus gewählt werden kann und wobei in dem stromprägenden Betriebsmodus im Wesentlichen oder überwiegend auf einen Stromsollwert gesteuert oder geregelt wird, und in dem spannungsprägenden Betriebsmodus im Wesentlichen oder überwiegend auf einen Spannungssollwert gesteuert oder geregelt wird.

## Beschreibung

Die vorliegende Erfindung betrifft ein Verfahren zum Einspeisen elektrischer Leistung in ein elektrisches Versorgungsnetz mittels einer umrichtergeführten Einspeisevorrichtung, insbesondere mittels eines Windparks oder einer Windenergieanlage. Außerdem betrifft die vorliegende Erfindung einen entsprechenden Windpark und sie betrifft eine entsprechende Windenergieanlage.

Das Einspeisen elektrischer Leistung durch einen Windpark oder zumindest durch eine einzelne Windenergieanlage ist bekannt. Moderne Windenergieanlagen bzw. Windparks verwenden dafür Umrichtereinheiten, um die aus dem Wind erzeugte elektrische Leistung geeignet zum Einspeisen zu konditionieren, insbesondere hinsichtlich Frequenz, Phase und Amplitude an die jeweilige Einspeisesituation anzupassen.

Dabei ist auch bekannt, mittels Windenergieanlagen bzw. Windparks eine Stützung des elektrischen Versorgungsnetzes vorzunehmen, was auch vereinfacht als Netzstützung bezeichnet werden kann.

Für eine solche Netzstützung wird besonders die Leistungseinspeisung an die konkrete Netzsituation angepasst. Dazu gehört, die eingespeiste Leistung je nach Netzsituation oder je nach Netzanforderung zu erhöhen oder zu verringern. Es kommt auch in Betracht, eine Blindleistung abhängig einer Netzsituation oder Netzanforderung einzuspeisen. Eine Netzanforderung ist dabei insbesondere eine solche, die von einem Betreiber des elektrischen Versorgungsnetzes, also dem Netzbetreiber, an die Windenergieanlage bzw. den Windpark gerichtet wird.

Häufig sind für eine solche Netzstützung feste Steuerungsvorschriften in der Windenergieanlage bzw. dem Windpark hinterlegt. Solche Steuerungsvorschriften können bspw. eine netzfrequenzabhängige Leistungsregelung beinhalten, wie sie bspw. in dem Patent US 6,891,281 beschrieben ist. Als weiteres Beispiel kommt eine spannungsabhängige Phasenwinkelregelung in Betracht, die einen Zusammenhang zwischen dem Phasenwinkel, der den Phasenunterschied zwischen Strom und Spannung beschreibt, und einer elektrischen Spannung des elektrischen Versorgungsnetzes bzw. durch das elektrische Versorgungsnetz bestimmten Spannung angibt. Eine solche spannungsabhängige Phasenwinkelregelung ist in dem US Patent US 6,965,174 beschrieben. Es kommt auch in Betracht, dass bei einem schnellen Frequenzabfall entsprechend kurzfristig und kurzzeitig eine Leistungserhöhung im Sinne einer Momentanreserve bereitgestellt wird, wobei diese Leistungserhöhung aus der Schwungmasse des rotierenden Rotors der Windenergieanlage genommen werden kann. Eine solche Variante ist bspw. dem US Patent US 9,279,411 zu entnehmen.

Viele dieser Stützmaßnahmen, besonders die frequenzabhängigen Leistungsänderungen, gehen von einem elektrischen Versorgungsnetz einer bestimmten, derzeit üblichen Art aus. Besonders wird im Allgemeinen zugrundegelegt, dass das elektrische Versorgungsnetz durch Großkraftwerke geführt wird, die große direkt mit dem elektrischen Versorgungsnetz gekoppelte Synchrongeneratoren verwenden. Bspw. geht eine frequenzabhängige Leistungsänderung hierauf zurück, die nämlich ein Verhalten eines solchen direkt gekoppelten Synchrongenerators berücksichtigt. Bei einem solchen Verhalten beschleunigt sich ein solcher Synchrongenerator, wenn er die Leistung, mit der er mechanisch, bspw. durch eine Dampfturbine, gedreht wird, nicht an das elektrische Versorgungsnetz abgeben kann. Diese Drehzahlerhöhung führt dann, weil er elektrisch direkt mit dem elektrischen Versorgungsnetz gekoppelt ist, zu einer Erhöhung der eingespeisten Frequenz und das ist im Wesentlichen der Grund, warum eine im elektrischen Versorgungsnetz erhöhte Frequenz ein Leistungsüberangebot in dem elektrischen Versorgungsnetz anzeigen kann.

Auch Spannungseffekte in dem elektrischen Versorgungsnetz gehen häufig auf das Verhalten eines solchen direkt gekoppelten großen Synchrongenerators zurück. Zum Einen führen diese Synchrongeneratoren im Wesentlichen die Spannung im elektrischen Versorgungsnetz, wobei zusätzlich ortsabhängige Variationen im Wesentlichen durch Transformatoren und Übertragungsleitungen hervorgerufen werden. Zum Anderen können aber Effekte wie Phasensprünge ebenfalls auf das Verhalten von Synchrongeneratoren zurückgeführt werden.

Ändert sich nun die Struktur des elektrischen Versorgungsnetzes, kann das zur Folge haben, dass die vorgesehenen Netzstützungsmaßnahmen nicht mehr oder nicht mehr so gut zur Netzstützung geeignet sind.

U.A. wird das Verhalten des elektrischen Versorgungsnetzes auch durch die Art und Weise beeinflusst, wie Erzeuger und Verbraucher in dem elektrischen Versorgungsnetz verteilt sind. Abschnitte, die dezentral sind und an denen viele Windenergieanlagen oder Windparks angeschlossen sind, verhalten sich bspw. anders als Netzabschnitte, die viele Verbraucher in der Nähe eines Großkraftwerkes haben.

Das Deutsche Patent- und Markenamt hat in der Prioritätsanmeldung zu vorliegender Anmeldung folgenden Stand der Technik recherchiert: EP 2 182 626 A1; DE 10 2014 214 151 A1; DE 10 2013 207 264 A1; US 6,891,281 B2; US 6,965,174 B2 und US 9,279,411 B2

Der vorliegenden Erfindung liegt somit die Aufgabe zugrunde, zumindest eines der o.g. Probleme zu adressieren. Insbesondere soll eine Lösung vorgeschlagen werden, eine Netzstützung durch umrichtergeführte Einspeisevorrichtungen, insbesondere Windparks und somit Windenergieanlagen zu verbessern bzw. hinsichtlich Netzstützung oder Netzstabilisierung das Einspeisen durch solche umrichtergeführten Einspeisevorrichtungen zu verbessern, die Einspeisung also netzverträglicher zu gestalten. Zumindest soll zu bisher bekannten Lösungen eine alternative Lösung vorgeschlagen werden.

Erfindungsgemäß wird ein Verfahren zum Einspeisen gemäß Anspruch 1 vorgeschlagen. Demnach wird elektrische Leistung mittels einer umrichtergeführten Einspeisevorrichtung in ein elektrisches Versorgungsnetz eingespeist. Als umrichtergeführte Einspeisevorrichtung werden hier Windparks oder Windenergieanlagen vorgeschlagen. Eine umrichtergeführte Einspeisevorrichtung ist eine solche, die mittels eines Umrichters oder eines Wechselrichters den eingespeisten Strom bzw. die eingespeiste Spannung erzeugen, nämlich nach Frequenz, Phasenlage und Amplitude. Auch kann bspw. ein Oberwellenanteil dadurch eingestellt werden.

Dazu wird vorgeschlagen, dass zur Einspeisung der elektrischen Leistung wenigstens zwischen einem stromprägenden Betriebsmodus und einem spannungsprägenden Betriebsmodus gewählt werden kann. Dabei wird in dem stromprägenden Betriebsmodus auf einen Stromsollwert gesteuert oder geregelt und in dem spannungsprägenden Betriebsmodus auf einen Spannungssollwert gesteuert oder geregelt. Diese beiden Betriebsmodi unterscheiden sich insoweit grundlegend. Der stromprägende Betriebsmodus wird besonders so realisiert, dass ein einzuspeisender Sollstrom nach Frequenz, Phasenlage und Amplitude vorgegeben wird. Diese Vorgabe kann aber dynamisch sein und sich im laufenden Betrieb ständig ändern. Insbesondere kann sich die Vorgabe eines entsprechenden Stromsollwertes ständig an die verfügbare Leistung anpassen. Besonders im Falle einer Windenergieanlage bedeutet das, dass sich dieser Sollstrom ständig an die verfügbare Windleistung anpassen kann, also an die Leistung, die die Windenergieanlage in dem jeweiligen Moment aus dem Wind entnehmen kann.

Besonders kann eine solche umrichtergeführte Einspeisevorrichtung mehrere Einspeiseeinheiten aufweisen, nämlich besonders mehrere Umrichter bzw. Wechselrichter. Selbst in einer Windenergieanlage können mehrere solcher Einheiten vorhanden sein. Häufig kann jeweils eine solche Einspeiseeinheit in einem Schaltschrank vorhanden sein.

Der spannungsprägende oder stromprägende Betriebsmodus kann dabei bedeuten, dass jede Einspeiseeinheit, also jeder Umrichter oder Wechselrichter bzw. jeder Schaltschrank, in dem entsprechenden Betriebsmodus betrieben wird. Das kann also bedeuten, dass jeder betroffene Schaltschrank spannungsprägend einspeist oder jeder stromprägend einspeist.

Vorzugsweise wird gemäß einer Ausführungsform aber vorgeschlagen, dass auch ein Mischbetrieb in Betracht kommt, bei dem nur einige Einspeiseeinheiten den vorherrschenden Betriebsmodus haben. Soweit spannungsprägende Einspeiseeinheiten dominieren, kann auch von einem spannungsprägenden Betrieb gesprochen werden, bzw. wenn stromprägende Einheiten dominieren kann von einem stromprägenden Betrieb gesprochen werden.

Wird im stromprägenden Betriebsmodus elektrische Leistung so eingespeist, dass dafür jeweils ein Einspeisestrom vorgegeben wird, kann das besonders bedeuten, dass jede Einspeiseeinheit jeweils einen entsprechenden Einspeisestrom als Sollstrom vorgibt und einen solchen vorgegebenen Einspeisestrom dann auch erzeugt.

Eine Zentralsteuereinheit kann dabei die einzelnen Einspeiseeinheiten steuern und bspw. eine verfügbare Leistung, also insbesondere eine aus dem Wind verfügbare Leistung, entsprechend auf die einzelnen Einspeiseeinheiten verteilen, die davon abhängig dann jeweils den einzuspeisenden und damit einzustellenden Sollstrom vorgeben.

In gleicher Art und Weise kann auch ein Windpark betrieben werden, in dem eine zentrale Parksteuerung vorgesehen ist, die entsprechende Sollwerte an einzelne Windenergieanlagen geben kann und in den Windenergieanlagen können jeweils einzelne Steuerungseinrichtungen vorgesehen sein, die dort dann die einzelnen Einspeiseeinheiten ansteuern.

In dem stromprägenden Betriebsmodus wird somit ein Strom gemäß einem vorgegebenen Stromsollwert eingespeist. Ändert sich der Momentanwert bzw. Augenblickswert des Stroms, reagiert die entsprechende Einspeiseeinheit darauf und versucht der Änderung entgegenzuwirken.

Im spannungsprägenden Betrieb wird stattdessen eine Spannung vorgegeben und die betreffende Einspeiseeinheit versucht, ihre Einspeisespannung auf diesen vorgegebenen Spannungswert zu halten. Entsprechend reagiert die Einspeiseeinheit darauf, dass sich eine Spannungsänderung ergibt.

Ändert sich nun der Momentanwert der Spannung am Ausgang mit der entsprechenden Einspeiseeinheit kann dies sofort zu einer Reaktion der spannungsprägenden Einspeiseeinheit führen. Eine solche Spannungsänderung kann auch eine Frequenzänderung oder ein Phasensprung in der Spannung sein. Die spannungsprägende Einheit kann hierauf unmittelbar reagieren. Daran unterscheidet sie sich von einer stromprägenden Einheit. Die stromprägende Einheit reagiert insoweit auf Spannungsänderungen nicht.

Ein elektrisches Versorgungsnetz hat heutzutage als Führungsgröße die Spannung. D.h. dass eine Netzspannung vorgegeben ist, aber kein Netzstrom. Das Netz ist so ausgelegt, dass die Netzspannung möglichst konstant gehalten wird, wohingegen Leistungseinspeisung, Entnahme bzw. Übertragung im Wesentlichen durch die Stromhöhe erreicht wird. Mit anderen Worten wird ein Strom grundsätzlich nach Bedarf eingestellt und hat zunächst wenig Aussagekraft über den Zustand des elektrischen Versorgungsnetzes, wobei es natürlich Ausnahmen gibt, wenn bspw. ein Kurzschluss im elektrischen Versorgungsnetz auftritt oder eine Unterbrechung das Einspeisen elektrischen Stroms verhindert. Dem entgegen bedeutet eine Spannungsänderung regelmäßig eine Änderung einer Netzeigenschaft und kann damit besser und meist schneller Aufschluss auf eine Veränderung im elektrischen Versorgungsnetz geben.

Jedenfalls machen sich Änderungen im elektrischen Versorgungsnetz meist zunächst als Spannungsänderungen bemerkbar, es kommt auch in Betracht, dass sie sich nur als Spannungsänderungen bemerkbar machen. Darauf reagieren die spannungsprägenden Einheiten unabhängig einer überlagerten Leistungsregelung instantan, während stromprägende Einheiten solche Änderungen erst später oder ggf. gar nicht registrieren. Eine Reaktion einer stromprägenden Einheit auf eine Änderung im elektrischen Versorgungsnetz wird häufig erst durch eine Änderung der Vorgabe ihres Sollstroms berücksichtigt, besonders dadurch, dass eine solche Änderung des Netzes messtechnisch erfasst wird und aufgrund einer Regelungsvorschrift zu einem geänderten Stromsollwert führt.

Im Ergebnis erweisen sich somit spannungsprägende Einspeiseeinheiten besonders als netzprägende Einheiten, die durch ihr Wirkprinzip bedingt besonders schnell und damit besonders dynamisch Änderungen in dem elektrischen Versorgungsnetz entgegenwirken. Stromprägend arbeitende Einspeiseeinheiten zeichnen sich hingegen dadurch aus, dass sie eher verzögert auf Ereignisse im Netz reagieren Strom und damit Leistung in das elektrische Versorgungsnetz einspeisen.

Durch die vorgeschlagene Umschaltung zwischen stromprägendem Betrieb einerseits und spannungsprägendem Betrieb andererseits wird diese Besonderheit regelungstechnisch eingesetzt. Somit kann auf einen spannungsprägenden Betriebsmodus umgeschaltet werden, wenn eine besonders dynamische Stützung durch die umrichtergeführten Einspeisevorrichtungen bereitgestellt werden soll.

Dadurch kann auch besonders auf eine geänderte Topologie in dem elektrischen Versorgungsnetz reagiert werden. Wenn bspw. ein nahegelegenes Großkraftwerk, sei es temporäre oder dauerhaft, abgeschaltet wird, entfällt auch die regelnde Wirkung dieses Großkraftwerks auf das elektrische Versorgungsnetz. Besonders in einem solchen Fall könnte eine Umschaltung auf einen spannungsprägenden Betriebsmodus vorgeschlagen werden, um dadurch einen Teil einer solchen Eigenschaft des exemplarisch genannten Großkraftwerks auf das elektrische Versorgungsnetz zu ersetzen.

Gemäß einer Ausführungsform wird vorgeschlagen, dass ein aktueller Betriebsmodus zwischen dem stromprägenden und dem spannungsprägenden Betriebsmodus in mehreren Schritten oder in einem fließenden Übergang geändert werden kann. Es sind dadurch auch Betriebsmodi auswählbar, die nicht ausschließlich spannungsprägend oder ausschließlich stromprägend sind, sondern zu einem unterschiedlich starken Anteil stromprägend oder spannungsprägend sein können. Dadurch ist es möglich, dass die vorgeschlagene Wahl zwischen stromprägend und spannungsprägend sich nicht nur auf Extremfälle beschränken muss, sondern auch dynamisch an entsprechende Netzsituationen anpassbar ist.

Vorstehend oder nachstehend beschriebene Kriterien zum Auswählen zwischen stromprägenden oder spannungsprägenden Betriebsmodus sind sinngemäß auch auf entsprechende dazwischenliegende Betriebsmodi zu übertragen.

Gemäß einer Ausführungsform wird vorgeschlagen, dass zwischen dem stromprägenden und dem spannungsprägenden Betriebsmodus in Abhängigkeit wenigstens eines der folgenden Kriterien umgeschaltet bzw. ausgewählt wird, wobei auch hier in Betracht kommt, davon abhängig einen Betriebsmodus zwischen dem stromprägenden und dem spannungsprägenden Betriebsmodus auszuwählen. Als Kriterien werden die Folgenden vorgeschlagen:
- ein Maß einer Spannungsschwankung im elektrischen Versorgungsnetz,
- ein Strombegrenzungsmaß, das ein Maß dafür ist, wie oft spannungsprägende Einheiten der umrichtergeführten Einspeisevorrichtung eine Strombegrenzung erreicht haben,
- ein Verhältnis in das elektrische Versorgungsnetz einspeisender direkt gekoppelter Synchrongeneratoren zu in das elektrische Versorgungsnetz einspeisender umrichtergeführter Einspeisevorrichtungen, wobei als Bezugsgröße insbesondere die jeweils aktuell eingespeiste Leistung, insbesondere Wirkleistung bzw. ein Verhältnis der jeweils eingespeisten Leistung bzw. Wirkleistung verwendet wird,
- ein Maß einer Frequenzschwankung im elektrischen Versorgungsnetz,
- ein Maß an Phasensprüngen im Netz,
- eine Netzeigenschaft des elektrischen Versorgungsnetzes, insbesondere eine Netzsensitivität,
- ein Betriebszustand der umrichtergeführten Einspeisevorrichtung, insbesondere die aktuell eingespeiste Leistung, insbesondere Wirkleistung in Bezug auf eine Nennleistung der umrichtergeführten Einspeisevorrichtung,
- Anteil in das elektrische Versorgungsnetz einspeisender spannungsprägender Einspeisevorrichtungen,
- Anteil in das elektrische Versorgungsnetz einspeisender Windenergieanlagen,
- Anteil in das elektrische Versorgungsnetz einspeisender Solargeneratoren,
- eine Kurzschlussleistung am Netzanschlusspunkt,
- eine Netzimpedanz am Netzanschlusspunkt,
- ein Kurzschlussstromverhältnis am Netzanschlusspunkt,
- ein Erkennen einer Teilnetzbildung, insbesondere einer Inselnetzbildung und
- ein externes Umschaltsignal oder Auswahlsignal, insbesondere ein von einem Betreiber des elektrischen Versorgungsnetzes vorgegebenes Umschaltsignal.

Somit ist ein vorgeschlagenes Kriterium, dass ein Maß einer Spannungsschwankung im elektrischen Versorgungsnetz verwendet wird. Bspw. kann eine mittlere Schwankungsbreite zugrundegelegt werden. Hier kann bspw. über einen vorbestimmten Zeitraum wie eine Minute, zehn Minuten oder eine Stunde eine Spannungsschwankung aufgenommen werden, in dem der Mittelwert maximal auftretender Spannung zu dem Mittelwert minimal auftretender Spannung, bspw. bezogen auf den Effektivwert der Netzspannung, aufgenommen werden. Der Abstand zwischen so gemittelten Maximalspannungswerten und Minimalspannungswerten kann als Schwankungsbreite zugrundegelegt werden. Dann kann ein Grenzwert zugrundegelegt werden und abhängig davon, ob die so aufgenommene Schwankungsbreite den Grenzwert überschreitet oder nicht, kann der spannungsprägende Betriebsmodus, oder der stromprägende Betriebsmodus ausgewählt werden. Vorzugsweise wird der spannungsprägende Betriebsmodus ausgewählt, wenn die Spannungsschwankungen stark sind, die Schwankungsbreite also groß ist, der Grenzwert also überschritten wird. Wird zwischen dem stromprägenden und spannungsprägenden Betriebsmodus in mehreren Schritten geändert, so kann für entsprechende Zwischenbetriebsmodi ein weiterer Grenzwert oder weitere Grenzwerte vorgesehen werden.

Als ein mögliches Kriterium wird ein Strombegrenzungsmaß vorgeschlagen, das ein Maß dafür ist, wie oft spannungsprägende Einheiten der umrichtergeführten Einspeisevorrichtung eine Strombegrenzung erreicht haben. Es wurde erkannt, dass spannungsprägende Einheiten so arbeiten, dass bei einer Änderung des Momentanwertes bzw. Augenblickswertes der Spannung am Ausgang der entsprechenden Einspeiseeinheit dies sofort zu einer Reaktion der spannungsprägenden Einspeiseeinheit führen kann. Die spannungsprägende Einheit versucht dadurch die Spannung zu halten. Dieser Effekt ist erwünscht, kann aber zu einem hohen Strom führen, den die spannungsprägende Einheit einspeist. Wenn dieser Strom so groß wird, dass die betreffende Einheit eine Stromgrenze erreicht, ist das ein Zeichen dafür, dass die Einheit die Spannung kaum noch oder nicht mehr halten kann.

Daher wird das regelmäßige Erreichen der Stromgrenze als Indikator dafür genommen, dass mehr spannungsprägende Einheiten benötigt werden. Entsprechend wird vorgeschlagen, davon abhängig mit mehr Einheiten auf einen spannungsprägenden Betrieb zu wechseln, zumindest den Anteil spannungsprägender Einheiten zu erhöhen.

Vorzugsweise wird dabei vorgeschlagen, zu zählen, wie oft die spannungsprägenden Einheiten der Einspeisevorrichtung pro Einheit die Strombegrenzung in einem vorgegebenen Prüfzeitraum erreichen, und das als Stromgrenzenhäufigkeit zu Grunde zu legen und abhängig dieser Stromgrenzenhäufigkeit auf einen spannungsprägenden Betrieb zu wechseln, zumindest den Anteil spannungsprägender Einheiten zu erhöhen.

Vorzugsweise wird vorgeschlagen, dass das Strombegrenzungsmaß, bzw. die Stromgrenzenhäufigkeit abhängig wenigstens eines Reglerparameters der spannungsprägenden Einheit berücksichtigt wird. Das kann insbesondere eine Reglerverstärkung oder Reglerzeitkonstante sein. Insbesondere kann der wenigstens eine Reglerparameter über eine Gewichtung berücksichtigt werden, wobei die Gewichtung insbesondere umso kleiner gewählt wird, je kleiner die Reglerverstärkung, nämlich die Steigung einer verwendeten Statik der spannungsprägenden Einheit, gewählt wird. Dabei gibt eine solche Statik für eine wirkstromabhängige Frequenznachführung ein Verstärkungsmaß an, das einen linearen Zusammenhang der einzustellenden Frequenz zum eingespeisten Wirkstrom oder zur eingespeisten Wirkleistung angibt.

Bspw. wird vorgeschlagen, dass bei einer starken Reglerverstärkung, die somit einer großen Reglerverstärkung bzw. einer kleinen Reglerzeitkonstante entspricht, das Erreichen der Strombegrenzung als starkes Indiz dafür gesehen wird, dass der Anteil spannungsprägender Einheiten erhöht werden soll, als bei einem schwächeren Regler. Bei einem schwächeren Regler ist eher damit zu rechnen, dass dieser eine Grenze erreicht, als dass ein stärkerer Regler diese Grenze erreicht. Das Erreichen einer Grenze ist daher bei einem schwachen Regler eher normal und damit wenig aussagekräftig dafür, dass eine weitere spannungsprägende Einheit zur Unterstützung benötigt werden könnte. Bei einem starken Regler ist aber schon bei einem kleinen Strombegrenzungsmaß, bzw. einer kleinen Stromgrenzenhäufigkeit auf einen spannungsprägenden Betrieb zu wechseln, zumindest der Anteil spannungsprägender Einheiten zu erhöhen.

Das Verhältnis in das elektrische Versorgungsnetz einspeisender direkt gekoppelter Synchrongeneratoren zu in das elektrische Versorgungsnetz einspeisender umrichtergeführter Einspeisevorrichtungen gibt Aufschluss über das grundsätzliche Verhalten bzw. Regelungsverhalten des elektrischen Versorgungsnetzes. Besonders haben direkt gekoppelte Synchrongeneratoren ein bestimmtes, vereinfachend ausgedrückt, eher spannungsprägendes Verhalten auf das Netz. Je weniger solcher direkt gekoppelter Synchrongeneratoren das Netz beeinflussen, umso mehr spannungsprägende Einspeiseeinheiten können vorgeschlagen werden, um dieses Verhalten der direkt gekoppelten Synchrongeneratoren zumindest teilweise zu übernehmen.

Bei dem Verhalten kommt es dabei nicht auf die Anzahl an, weil direkt gekoppelte Synchrongeneratoren von Großkraftwerken regelmäßig eine vielfache Nennleistung einer einfachen Windenergieanlage aufweisen, sondern es wird hier eine leistungsbezogene Bezugsgröße zugrundegelegt. Besonders wird vorgeschlagen, die jeweils aktuellen Wirkleistungen der direkt gekoppelten Synchrongeneratoren einerseits und der umrichtergeführten Einspeisevorrichtungen andererseits zu verwenden. Alternativ kann auch jeweils die Nennleistung verwendet werden.

Ein weiteres Kriterium ist das Maß einer Frequenzschwankung. Auch dieses Frequenzschwankungsmaß kann ähnlich wie das Maß einer Spannungsschwankung aufgenommen werden, in dem bspw. statt einer Schwankungsbreite der Spannung eine Schwankungsbreite der Frequenz aufgenommen wird. Auch hier wird vorzugsweise vorgeschlagen, dass bei einer hohen Schwankungsbreite der Frequenz ein spannungsprägender Betriebsmodus ausgewählt wird, oder der Betriebsmodus zumindest in Richtung eines spannungsprägenden Betriebsmodus verstellt wird.

Ein Maß an Phasensprüngen im Netz wird gemäß einer weiteren Variante als Kriterium vorgeschlagen. Phasensprünge entstehen bei einer schlagartigen Stromänderung, die bspw. bei einem Lastabwurf auftreten kann. Solche schlagartigen Stromänderungen führen dann durch eine entsprechende Spannungsänderung an einer Netzimpedanz zu solchen Phasensprüngen. Es wurde erkannt, dass Phasensprünge, bei denen sich der sinusförmige Verlauf der Netzspannung sprunghaft verschiebt, durch Synchrongeneratoren verhindert werden, die direkt mit dem elektrischen Versorgungsnetz gekoppelt sind. Dabei treten solche Phasensprünge aber besonders dann auf, wenn wenige solcher Synchrongeneratoren vorhanden sind, bzw. wenn diese im Netz weit weg sind, denn je mehr Synchrongeneratoren im elektrischen Versorgungsnetz wirken, um stärker können sie Phasensprünge verhindern. Besonders können direktgekoppelte Synchrongeneratoren einen Netzschwerpunkt bilden. Je weiter ein Punkt im elektrischen Versorgungsnetz von dem Netzschwerpunkt entfernt ist, je größer wäre der Bedarf an spannungsprägenden Einheiten. Es wird damit vorgeschlagen, umso eher auf einen spannungsprägenden Betrieb umzuschalten, zumindest einen Anteil spannungsprägender Einheiten im elektrischen Versorgungsnetz zu erhöhen, je häufiger und/oder je stärker Phasensprünge auftreten.

Ebenso kann eine Netzeigenschaft des elektrischen Versorgungsnetzes als Kriterium dienen. Insbesondere eine Netzsensitivität wird vorgeschlagen. Eine Netzeigenschaft ist insoweit von einem Momentanzustand zu unterscheiden. Ein Momentanzustand ist bspw. die aktuelle Frequenz oder die aktuelle Spannungshöhe. Eine Netzeigenschaft hingegen ist eine Eigenschaft des Netzes, also wie das Netz auf eine Änderung reagiert. Daher wird besonders die Berücksichtigung einer Netzsensitivität als Netzeigenschaft vorgeschlagen. Eine Netzsensitivität wird hier vorzugsweise definiert als Verhältnis einer Spannungsänderung als Reaktion auf eine Änderung eingespeister Wirkleistung und dies wird bezogen auf einen Netzanschlusspunkt, nämlich den Netzanschlusspunkt, an dem die umrichtergeführte Einspeisevorrichtung einspeist. Damit kann also ein Maß gefunden werden, wie das elektrische Versorgungsnetz sich auf Änderungen verhält. Entsprechend kann davon abhängig zwischen stromprägenden und spannungsprägenden Betriebsmodus gewählt werden bzw. es kann eine sinnvolle Zwischenstufe gewählt werden. Vorzugsweise wird bei einer hohen Netzsensitivität, wenn das Netz also stark auf eine Änderungen der Wirkleistungseinspeisung reagiert, ein spannungsprägender Betriebsmodus vorgeschlagen.

Als weiteres Kriterium wird ein aktueller Betriebszustand der umrichtergeführten Einspeisevorrichtung vorgeschlagen, insbesondere die aktuell eingespeiste Leistung, insbesondere die Wirkleistung. Dies kann in Bezug auf eine Nennleistung der umrichtergeführten Einspeisevorrichtung gesetzt werden. Ist der Betriebszustand so, dass relativ wenig Wirkleistung eingespeist wird, kann, um die stützenden Eigenschaften der umrichtergeführten Einspeisevorrichtung zu verbessern, die Auswahl des spannungsgeführten Betriebsmodus vorgeschlagen werden.

Auch kann ein Anteil in das elektrische Versorgungsnetz einspeisender spannungsprägender Einspeisevorrichtungen betrachtet werden. Je mehr spannungsprägende Einspeisevorrichtungen bereits im elektrischen Versorgungsnetz aktiv sind, umso weniger braucht ein spannungsprägender Betriebsmodus ausgewählt zu werden. Auch hier ist der Anteil der spannungsprägenden Einspeisevorrichtungen besonders im Sinne ihrer einspeisenden Wirkleistung zu sehen.

Als weiteres Kriterium wird vorgeschlagen, zu betrachten, wie groß ein Anteil in das elektrische Versorgungsnetz einspeisender Windenergieanlagen bzw. Windparks ist. Auch hier wird die eingespeiste Wirkleistung als Maß vorgeschlagen. Durch die Betrachtung dieser Wirkleistung bedarf es praktisch auch keine Unterscheidung zwischen Windenergieanlagenanteil oder Windparkanteil. Durch diese leistungsbezogene Betrachtung des Anteils von Windenergieanlagen kann somit berücksichtigt werden, wie stark sich Windschwankungen auf die insgesamt in das elektrische Versorgungsnetz eingespeiste Leistung auswirken können, wie groß also der eingespeiste Wirkleistungsanteil ist, der vom Wind abhängt. Auch hier kann bei einem hohen Anteil Windenergieanlagen eher ein spannungsprägender Betrieb vorgeschlagen werden.

Ebenso wird als Kriterium ein Anteil in das elektrische Versorgungsnetz einspeisender Solargeneratoren vorgeschlagen. Hier liegt eine ähnliche Überlegung wie für den Anteil der Windenergieanlagen vor, wobei hier die sonnen- bzw. lichteinstrahlungsabhängige Berücksichtigung eingespeister Wirkleistung zugrundeliegt. Je größer der Anteil solarabhängiger Wirkleistung ist, umso eher wird ein spannungsprägender Betriebsmodus vorgeschlagen.

Für die Berücksichtigung des Windanteils und/oder des Solaranteils kommt auch die Berücksichtigung einer aktuellen Einspeisesituation in Betracht.

Andererseits kann bei einem großen Anteil von Windenergieanlagen im elektrischen Versorgungsnetz auch vorgeschlagen werden, eher einen stromprägenden Betriebsmodus zu wählen, weil Windenergieanlagen als solche auch bereits bei Betrieb im stromprägenden Betriebsmodus schnelle Regelungseigenschaften aufweisen.

Als weiteres Kriterium wird die Betrachtung einer Kurzschlussleistung am Netzanschlusspunkt vorgeschlagen. Das bezeichnet die Kurzschlussleistung, die das elektrische Versorgungsnetz an dem Netzanschlusspunkt im Falle eines Kurschlusses bereitstellen könnte. Insoweit ist die Kurzschlussleistung am Netzanschlusspunkt ebenfalls eine Netzeigenschaft des elektrischen Versorgungsnetzes in Bezug auf diesen Netzanschlusspunkt. Umso höher eine solche Kurzschlussleistung ist, umso stärker bzw. stabiler ist das elektrische Versorgungsnetz in diesem Bereich. Entsprechend bedarf es weniger Regelung und insoweit wird vorgeschlagen, bei einer kleinen Kurzschlussleistung auf einen spannungsprägenden Betriebsmodus zu schalten.

Eine Netzimpedanz am Netzanschlusspunkt kann ebenfalls als Kriterium vorgesehen sein und je geringer die Netzimpedanz dort ist, umso weniger bedarf es eines spannungsprägenden Betriebsmodus. Der spannungsprägende Betriebsmodus wird somit vorgeschlagen, wenn die Netzimpedanz groß ist, bspw. einen vorbestimmten Grenzwert überschreitet.

Ein Kurzschlussstromverhältnis am Netzanschlusspunkt ist ein weiteres Kriterium, von dem abhängig zwischen einem spannungsprägenden Betriebsmodus oder einem stromprägenden Betriebsmodus ausgewählt werden kann. Das Kurzschlussstromverhältnis bezeichnet das Verhältnis einer am Netzanschlusspunkt netzseitig bereitstellbaren Kurzschlussleistung in Bezug auf die Nennleistung der dort am Netzanschlusspunkt angeschlossenen Einspeisevorrichtung. Je kleiner das Kurzschlussstromverhältnis ist, umso stärker ist der Netzanschlusspunkt durch die angeschlossene Einspeisevorrichtung ausgelastet. Entsprechend ist eine Einspeisung mittels einer solchen Einspeisevorrichtung am Netzanschlusspunkt umso stabiler, umso größer das Kurzschlussstromverhältnis ist. Bspw. stellt üblicherweise ein Kurzschlussstromverhältnis von 10 oder selbst noch ein Kurzschlussstromverhältnis von 6 einen sehr stabilen Zustand dar. Ab einem Kurzschlussstromverhältnis von 4 oder weniger kann vorgeschlagen werden, einen Anteil spannungsprägender Einspeiseeinheiten zu erhöhen. Vorzugsweise wird bei einem Kurzschlussstromverhältnis von 2 oder weniger, insbesondere bei einem Kurzschlussstromverhältnis von weniger als 1,5 vorgeschlagen, den spannungsprägenden Betriebsmodus auszuwählen.

Das Erkennen einer Teilnetzbildung kann ebenfalls ein bevorzugtes Kriterium darstellen. Eine Teilnetzbildung bezeichnet eine Situation, bei der sich Teile des elektrischen Versorgungsnetzes voneinander getrennt haben. Der verbleibende Teil, also das verbleibende Teilnetz, an dem sich der Netzanschlusspunkt der umrichtergeführten Einspeisevorrichtung befindet, kann durch eine solche Teilnetzbildung geschwächt sein und zu Instabilitäten oder zumindest Schwingungsverhalten neigen. Entsprechend wird bei Erkennen einer Teilnetzbildung vorgeschlagen, den spannungsprägenden Betriebsmodus auszuwählen.

Eine besondere Situation einer Teilnetzbildung ist eine Inselnetzbildung, bei der das Teilnetz, an das die Einspeisevorrichtung über ihren Netzanschlusspunkt angeschlossen ist, ein eigenes System bildet. In diesem Fall müssen die Erzeuger, die mit diesem Inselnetz verbunden sind, eigenständig die Regelung bzw. Steuerung dieses Inselnetzes übernehmen. Besonders eine solche Situation kann durch einen spannungsprägenden Betriebsmodus berücksichtigt werden, zumindest besser berücksichtigt werden, als durch einen im Wesentlichen stromprägenden Betriebsmodus.

Ein weiteres Kriterium ist, dass eine Auswahl durch ein externes Umschaltsignal erfolgt. Ein solches Umschaltsignal kann besonders von einem Betreiber es elektrisches Versorgungsnetzes, also dem Netzbetreiber, kommen und damit wird diesem Netzbetreiber ermöglicht, auf die Regelungseigenschaften dieser Einspeisevorrichtung einzuwirken. Bspw. kann damit der Netzbetreiber auch vorausschauend die umrichtergeführte Einspeisevorrichtung in einen stärker regelnden Betriebsmodus, nämlich den spannungsprägenden Betriebsmodus, bringen.

Ein solches Umschaltsignal oder Auswahlsignal kann auch so gestaltet sein, dass ein Mischbetriebsmodus eingestellt wird. Ein Mischbetriebsmodus ist ein solcher Betriebsmodus, der stromprägende und spannungsprägende Eigenschaften hat bzw. kombiniert. Eine solche Kombination und damit ein solcher Mischbetriebsmodus kann besonders dadurch erreicht werden, dass einige Einspeiseeinheiten stromprägend und einige spannungsprägend arbeiten.

Die Kriterien, nach denen zwischen stromprägenden und spannungsprägenden Betriebsmodus umgeschaltet wird, bzw. nach denen auf einen Mischbetriebsmodus dazwischen geschaltet wird, können auch kombiniert werden. Eine Kombination von zwei oder mehr Merkmalen kann grundsätzlich so vorgenommen werden, dass jedes Kriterium auf einen einheitlichen Wert normiert wird. Ein Beispiel wäre, für jedes Kriterium einen Wert von 0 bis 1, also 0 bis 100 Prozent anzunehmen. Ein solcher Wert kann das jeweilige Kriterium als solches kennzeichnen.

Es kommt aber auch in Betracht, dass erst das Ergebnis des Kriteriums entsprechend auf einen solchen Einheitswert gebracht wird. Es wird also jedes Kriterium zunächst einzeln betrachtet und ausgewertet. Die Auswertung wird dann in einen einheitlichen Bereich gebracht. So kann bspw. das Ergebnis einer Auswertung sein, dass ein schwacher Bedarf für ein Umschalten auf einen spannungsprägenden Betriebsmodus besteht. Dieser Bedarf kann der bspw. als 30 Prozent angegeben werden kann, oder es kommt heraus, dass ein starker Bedarf für eine solche Umschaltung besteht, die bspw. als 70 Prozent angegeben werden kann. Genauso kann bei jedem Kriterium ein solcher Bedarf als Bedarfswert zum Umschalten oder nicht Umschalten mit einem Wert von 0 bis 1, also 0 bis 100 Prozent angegeben werden. Werden dann mehrere Kriterien berücksichtigt, können deren ausgegebene Bedarfswerte, also die beschriebenen Werte, die im Bereich von 0 bis 1 bzw. 0 bis 100 Prozent liegen können, gemittelt werden.

Es kommt auch in Betracht, dass außerdem die Kriterien mit einer Gewichtung versehen werden, so dass bspw. ein Kriterium mit einem Wert 5 gewichtet wird und ein Kriterium bspw. mit einem Wert 2 gewichtet wird. Die gemeinsame Betrachtung der jeweiligen Bedarfswerte der Kriterien kann dann bspw. so erfolgen, dass jeder Bedarfswert mit der jeweiligen Gewichtung des zugrundeliegenden Kriteriums multipliziert wird und aus den so ermittelten Ergebnissen für jedes Kriterium ein Mittelwert gebildet wird, in dem alle so gewichteten Bedarfswerte aufaddiert werden, und diese Summe durch die Summe der Gewichtungsfaktoren geteilt wird, um nur ein Beispiel zu nennen.

Gemäß einer Ausführungsform wird vorgeschlagen, dass zum Umschalten zwischen dem stromprägenden und dem spannungsprägenden Betriebsmodus, was auch das Anwählen einer Zwischenposition beinhaltet, eine Umschaltsteuerung vorgesehen ist und diese Umschaltsteuerung hat ein Umschaltkriterium implementiert. Das Umschaltkriterium wird also in dieser Umschaltsteuerung geprüft und dann ggf. eine Umschaltung vorgesehen.

Außerdem oder alternativ schaltet die Umschaltsteuerung in Abhängigkeit wenigstens eines der vorstehend erläuterten Kriterien um. Somit können die Kriterien, oder zumindest eines davon, durch eine solche Umschaltsteuerung umgesetzt werden.

Das Umschalten mittels der Umschaltsteuerung kann bspw. so erfolgen, dass die Umschaltsteuerung ein entsprechendes Umschaltsignal an betroffene Einspeiseeinheiten sendet und diese dadurch von einem stromprägenden Betriebsmodus in einen spannungsprägenden Betriebsmodus wechseln. Besonders für eine Umschaltung auf einen Mischbetriebsmodus kann vorgesehen sein, dass die Umschaltsteuerung dafür mit mehreren Einspeiseeinheiten gekoppelt ist und die Umschaltsteuerung einige dieser Einspeiseeinheiten auf den stromprägenden Betriebsmodus setzt, und andere der Einspeiseeinheiten auf den spannungsprägenden Betriebsmodus setzt. Dadurch kann je nach Anzahl der Einspeiseeinheiten, die für den jeweiligen Betriebsmodus ausgewählt werden, der Mischbetrieb entsprechend gesteuert werden. Ein reiner stromprägender oder spannungsprägender Betriebsmodus ist dann erreichbar, wenn alle dieser Spannungseinheiten durch die Umschaltsteuerung auf den stromprägenden bzw. spannungsprägenden Betrieb gesetzt werden.

Außerdem oder alternativ wird vorgeschlagen, dass in der Umschaltsteuerung ein Adaptionsalgorithmus implementiert ist. Dieser kann ein Kriterium verwenden und Veränderungen nach einer Umschaltung mittels eines Gütemaßes qualitativ und/der quantitativ bewerten. Auch hier wird die Berücksichtigung eines Mischbetriebsmodus zumindest gemäß einer Ausführungsform vorgeschlagen.

Es kann nun bspw. ausgewertet werden, ob sich, um ein Beispiel zu nennen, eine Spannungsschwankung nach Umschaltung von einem stromprägenden Betriebsmodus auf einen spannungsprägenden Betriebsmodus reduziert werden konnte, bzw. wie stark sie reduziert werden konnte. Wird in diesem Beispiel beobachtet, dass die Spannungsschwankung erheblich abgenommen hat, so kann die Umschaltung grundsätzlich als gut bewertet werden. War der Effekt gering, kann bspw. in Betracht kommen, bereits früher, also bei geringeren Spannungsschwankungen auf den spannungsprägenden Betriebsmodus umzuschalten.

Besonders bei einer Mitberücksichtigung eines Mischbetriebs kann, um bei dem Beispiel der Spannungsschwankung zu bleiben, der Anteil spannungsprägender Einheiten, also Einheiten die in einen spannungsprägenden Betriebsmodus gewechselt haben, erhöht werden, wenn sich herausgestellt hat, dass die zuvor gewählte Mischform, also der zuvor gewählte Mischbetriebsmodus noch nicht ausreichend war.

Die so gewonnenen Erkenntnisse, sei es nun mit oder ohne Mischbetriebsmodus, können so implementiert und hinterlegt werden, dass die Umschaltsteuerung generell geändert, nämlich adaptiert wird. Die hier festgestellten Veränderungen der Umschaltalgorithmen werden dann also für die Zukunft durch eine entsprechende Adaption vorgesehen. Im einfachsten Beispiel kann das bedeuten, dass für das Beispiel der Spannungsschwankung eine Spannungsgrenze zum Umschalten verändert wird und beim nächsten Mal diese veränderte Grenze verwendet wird. Es können auf diese Art und Weise aber auch komplexere Zusammenhänge angepasst werden.

Gemäß einer weiteren Ausführungsform wird vorgeschlagen, dass zusätzlich ein frequenzprägender Betrieb ausgewählt werden kann, in dem die umrichtergeführte Einspeisevorrichtung auf einen Frequenzsollwert steuert oder regelt, insbesondere dass zwischen dem frequenzprägenden Betrieb und einem frequenzoffenen Betriebsmodus umgeschaltet werden kann. Dabei regelt die umrichtergeführte Einspeisevorrichtung im frequenzoffenen Betriebsmodus auf eine im elektrischen Versorgungsnetz erfasste Frequenz. Befindet sich die Einspeisevorrichtung also im frequenzoffenen Betriebsmodus, wird ein im elektrischen Versorgungsnetz erfasste Frequenz zugrundegelegt und davon abhängig das entsprechende Sollsignal vorgegeben. Das bedeutet, dass im spannungsprägenden Betrieb die Spannung mit diesem Frequenzwert vorgegeben wird bzw. im stromprägenden Betrieb der Strom, also der Sollstrom mit diesem Frequenzwert vorgegeben wird. Im frequenzprägenden Betrieb wird ein Spannungssignal mit einer vorgegebenen Frequenz erzeugt und diese vorgegebene Frequenz kann der Netzfrequenz nachgeführt werden. Dafür wird vorgeschlagen, dass diese Nachführung der Frequenz mit einer großen Zeitkonstante erfolgt.

Wechselt die Einspeisevorrichtung nun in den frequenzprägenden Betrieb, was besonders für einen spannungsprägenden Betrieb vorgesehen ist, so wird der entsprechende Sollwert, also insbesondere im spannungsprägenden Betrieb der Spannungssollwert, der im elektrischen Versorgungsnetz erfassten Frequenz nicht nachgeführt, oder evtl. nur verzögert nachgeführt. Stattdessen wird eine Frequenz vorgegeben und der Spannungssollwert, also die Folge der Augenblickswerte, wird dann mit dieser vorgegebenen Frequenz vorgegeben. Dadurch kann die Einspeisevorrichtung eine Frequenzführung übernehmen oder unterstützen bzw. zu einer höheren Frequenzkonstanz beitragen. Ein solcher frequenzprägender Betrieb ist besonders im Falle einer erkannten Teilnetzbildung, insbesondere im Falle einer erkannten Inselnetzbildung vorteilhaft und wird vorzugsweise dann vorgeschlagen.

Gemäß einer weiteren Ausführungsform wird vorgeschlagen, dass die umrichtergeführte Einspeiseeinrichtung an einem Spannungsausgang ein Spannungssignal ausgibt. Der Spannungsausgang ist mit einer Drossel verschaltet, so dass sich in Abhängigkeit des Spannungssignals, in Abhängigkeit einer Spannung im elektrischen Versorgungsnetz und in Abhängigkeit der Drossel ein Ausgangsstrom und eine Ausgangsspannung an einem Ausgang der Drossel ergeben. Es ergeben sich dabei eine Ausgangsspannung am Ausgang der Drossel und ein Ausgangsstrom ebenfalls am Ausgang der Drossel. Diese Ausgangsspannung und dieser Ausgangsstrom werden für weitere Regelungsschritte verwendet.

Davon ausgehend wird im stromprägenden Betriebsmodus eine Stromregelung verwendet und der beschriebene Ausgangsstrom als Istwert zurückgeführt. Entsprechend wird er mit einem Sollwert für den Ausgangsstrom verglichen, im Sinne eines regelungstechnischen Soll-Ist-Wertvergleichs.

Außerdem oder alternativ wird im spannungsprägenden Betriebsmodus eine Spannungsregelung verwendet und die beschriebene Ausgangsspannung am Ausgang der Drossel als Istwert zurückgeführt. Dies kann dann mit einem Spannungssollwert verglichen werden.

Diese Rückführung und der Vergleich des Ausgangsstroms bzw. Ausgangsspannung ist als Vergleich von Momentanwerten zu verstehen.

Gemäß einer weiteren Ausführungsform wird vorgeschlagen, dass eine Umschaltung oder Auswahl zwischen dem spannungsprägenden Betriebsmodus und dem stromprägenden Betriebsmodus durch eine computerimplementierte Steuerung realisiert wird. Hierin können somit auf einfache Art und Weise Kriterien und Steuervorschriften und resultierende Steuerbefehle in der computerimplementierten Steuerung umgesetzt werden. Etwaige Änderungen können durch Umprogrammierung bzw. Installation eines Updates erreicht werden. Außerdem kann hier auf einfache Art und Weise auch eine komplexere Steuerung umgesetzt werden, einschließlich eines Adaptionsalgorithmus.

Insbesondere wird für diese Realisierung durch eine computerimplementierte Steuerung eine Erfassung zur Rückführung des Ausgangsstroms und der Ausgangsspannung als dauerhafte Rückführung vorgesehen. Es werden somit beiden Größen zurückgeführt und die computerimplementierte Steuerung kann somit auf beide Größen zurückgreifen und zwischen dem erfassten Ausgangsstrom und der erfassten Ausgangsspannung als zurückgeführten Ist-Wert wählen. Es kann also auf einfache Art und Weise damit auch kurzfristig und auch kurzzeitig zwischen Betriebsmodi gewechselt werden.

Besonders wird vorgeschlagen, dass eine solche computerimplementierte Steuerung an jeder Einspeiseeinheit vorgesehen ist. Ggf. können Anforderungen an eine Umschaltung von einer übergeordneten Zentralsteuereinheit als Anforderungssignal an jede dieser computerimplementierten Steuerungen gegeben werden.

Gemäß einer weiteren Ausführungsform wird vorgeschlagen, dass die umrichtergeführte Einspeisevorrichtung wenigstens einen Umrichter aufweist, um das Spannungssignal durch ein Pulsmuster als gepulstes Spannungssignal zu erzeugen und wobei das Pulsmuster in Abhängigkeit des gewählten Betriebsmodus und des zurückgeführten Ist-Werts erzeugt wird. Ist also als Betriebsmodus der stromprägende Betriebsmodus gewählt, wird zum Einstellen der Momentanwerte entsprechend der zurückgeführte Ist-Wert des Ausgangsstroms verwendet und dabei mit einem entsprechenden Sollstrom verglichen, nämlich jeweils die Folge von Augenblickswerten. Entsprechend wird dann, wenn der spannungsprägende Betriebsmodus gewählt ist, das zurückgeführte Spannungs-Ist-Signal verwendet und mit einem Spannungssollwert verglichen. Damit ist auf einfache Art und Weise die Umschaltung zwischen stromprägenden Betrieb und spannungsprägenden Betrieb umsetzbar.

Gemäß einer weiteren Ausführungsform wird vorgeschlagen, dass als Stromsollwert oder Spannungssollwert ein Stromband bzw. Spannungsband vorgegeben wird. Der zu erzeugende Ausgangsstrom bzw. die zu erzeugende Ausgangsspannung braucht dann nur insoweit realisiert zu werden, dass er bzw. sie in dem Stromband bzw. dem Spannungsband liegt. Dadurch kann auch eine zu starke Regelungsaktivität vermieden werden. Besonders kann auch vorgesehen sein, dass keine Regelung erfolgt, solange das tatsächliche Stromsignal das tatsächliche Spannungssignal in dem entsprechenden Band, also in dem Stromband bzw. Spannungsband liegt. Auch dies bezieht sich jeweils auf die Folge von Augenblickswerten.

Erfindungsgemäß wird auch eine Einspeisevorrichtung vorgeschlagen, nämlich eine Windenergieanlage oder ein Windpark. Diese Einspeisevorrichtung ist zum Einspeisen elektrischer Leistung in ein elektrisches Versorgungsnetz an einem Netzanschlusspunkt vorgesehen. Sie weist wenigstens einen Umrichter oder Wechselrichter zum Durchführen des Einspeisens auf, so dass die Einspeisevorrichtung umrichtergeführt arbeitet. Der Umrichter bzw. Wechselrichter sorgt besonders dafür, dass zum Einspeisen in das elektrische Versorgungsnetz ein Einspeisesignal mit entsprechender Spannungsamplitude, Frequenz- und Phasenlage generiert wird. Ob dies durch einen Wechselrichter vorgenommen wird, der eingangsseitig eine Gleichspannung als Versorgungsquelle hat, oder durch einen Umrichter, der eingangsseitig eine Wechselspannung als Energiequelle hat, ist nicht von Bedeutung, solange der Umrichter bzw. Wechselrichter ausgangsseitig ein entsprechendes Signal mit entsprechender Amplitude, Frequenz und Phase ausgibt.

Für diese Einspeisevorrichtung wird nun vorgeschlagen, dass sie wenigstens eine Umschaltsteuerung zum Umschalten zwischen einem stromprägenden und einem spannungsprägenden Betriebsmodus aufweist. Eine solche Umschaltsteuerung kann vorzugsweise durch eine computerimplementierte Steuerung realisiert werden.

Der stromprägende Betriebsmodus ist dabei ein solcher, bei dem auf einen Stromsollwert gesteuert oder geregelt wird und der spannungsprägende Betriebsmodus ist ein solcher, bei dem auf einen Spannungssollwert gesteuert oder geregelt wird.

Auch hier kommt in Betracht, dass die wenigstens eine Umschaltsteuerung auch das Schalten oder Auswählen eines Mischbetriebsmodus vorsieht.

Vorzugsweise arbeitet die Einspeisevorrichtung so, wie gemäß wenigstens einer vorstehend beschriebenen Ausführungsform des beschriebenen Verfahrens zum Einspeisen elektrischer Leistung in das elektrische Versorgungsnetz ausgeführt wird.

Dadurch können die Möglichkeiten und Vorteile, die im Zusammenhang mit wenigstens einer Ausführungsform des Einspeiseverfahrens beschrieben wurden, durch diese Einspeisevorrichtung realisiert werden.

Die Erfindung wird nun nachfolgend exemplarisch anhand von Ausführungsformen unter Bezugnahme auf die begleitenden Figuren näher erläutert.
- Figur 1: zeigt eine Windenergieanlage in einer perspektivischen Darstellung.
- Figur 2: zeigt einen Windpark in einer schematischen Darstellung.
- Figur 3: veranschaulicht eine geographische Verteilung stromprägender und spannungsprägender Einspeiser am Beispiel des Europäischen Verbundnetzes.
- Figur 4: zeigt schematisch einen Netzabschnitt eines elektrischen Versorgungsnetzes mit mehreren verbundenen Windparks.
- Figur 5: zeigt schematisch eine Darstellung mit einer stromprägenden Einspeiseeinheit und einer spannungsprägenden Einspeiseeinheit.
- Figur 6: veranschaulicht einen Netzabschnitt eines elektrischen Versorgungsnetzes.

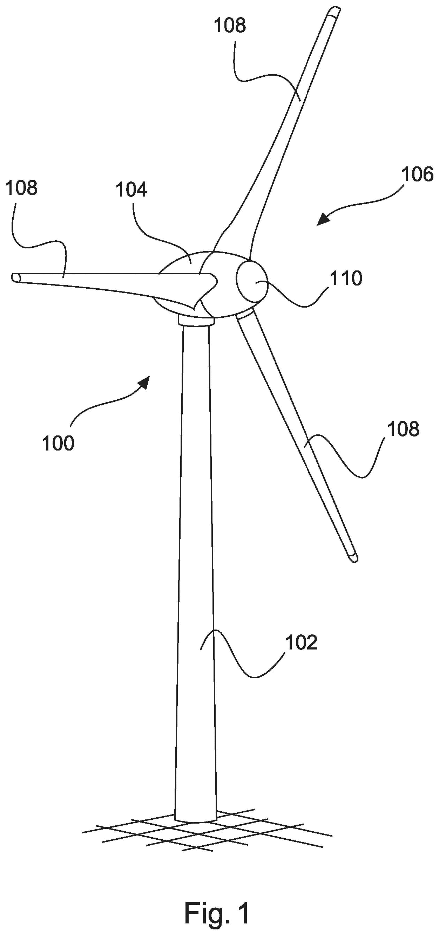

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

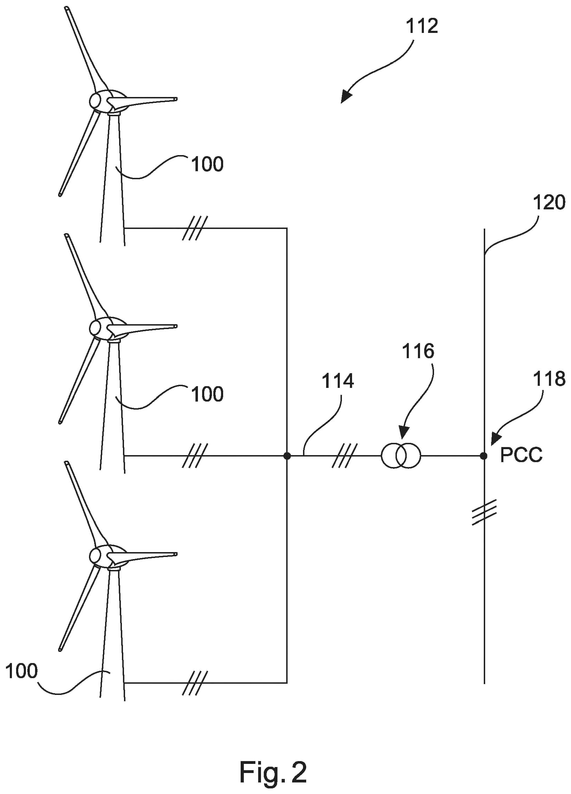

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112.

Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

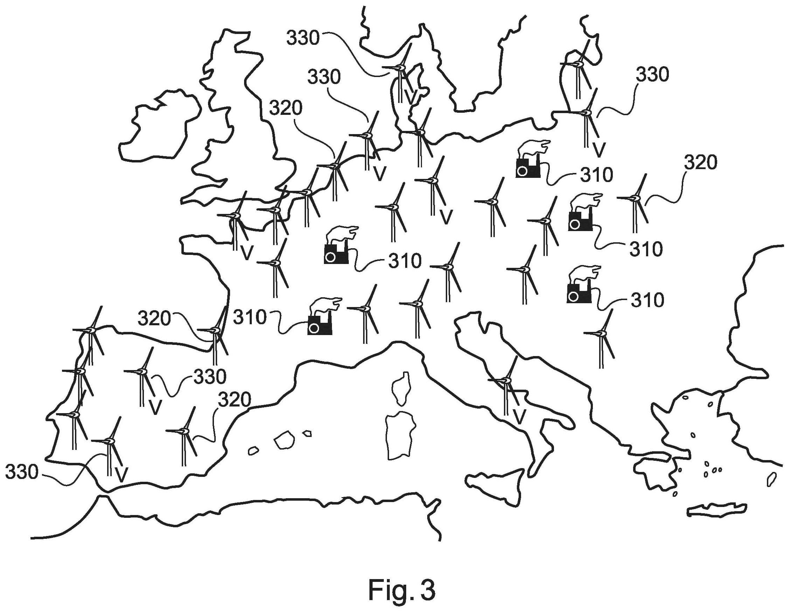

Figur 3 zeigt einen Ausschnitt eines Umrisses von Europa und dabei einen Ausschnitt, in dem das Europäische Verbundnetz in großen Teilen das elektrische Versorgungsnetz bildet. Veranschaulichend sind in der Figur 3 Windparks und Großkraftwerke über die Region verteilt eingezeichnet. Diese stehen nur exemplarisch für diverse weitere Erzeuger und diese Darstellung ist insoweit für das Europäische Verbundnetz nicht abschließend.

Jedenfalls sind einige Großkraftwerke 310 und unterschiedliche Windparks gezeigt. Es sind nämlich stromprägend arbeitende Windparks 320 und spannungsprägende Windparks 330 eingezeichnet. Zur besseren Übersichtlichkeit sind nur einige Bezugsziffern eingezeichnet, aber die beiden unterschiedlichen Windparks 320 und 330 können auch aufgrund des dargestellten Symbols voneinander unterschieden werden. Für stromprägende Windparks 320 ist als Symbol eine einfache Windenergieanlage angedeutet und für spannungsprägende Windparks 330 ist als Symbol eine einfache Windenergieanlage mit einem V am Turmfuß gewählt. Der Buchstabe V am Turmfuß soll somit die Spannungsprägung veranschaulichen.

Die Figur 3 verdeutlicht somit im Wesentlichen, dass spannungsprägende Einspeiser über den gezeigten geographischen Bereich verteilt sind, nämlich entweder als Großkraftwerke 310 oder als spannungsprägende Windparks 330. Beispielsweise, ohne dass dies den derzeitigen Ist-Zustand wiederspiegeln soll, sind auf der iberischen Halbinsel, der italienischen Halbinsel, in Dänemark sowie in der Bretagne keine Großkraftwerke 310 aber spannungsprägende Windparks 330 dargestellt. Es sind aber auch dort nicht nur spannungsprägende Windparks dargestellt, sondern auch stromprägende Windparks 320. Somit ist eine gute Verteilung erreicht worden.

Die gezeigte Verteilung der Figur 3 kann aber veränderlich sein. Bspw. können Großkraftwerke abgeschaltet werden. Besonders in Deutschland werden in naher Zukunft einige Kernkraftwerke abgeschaltet. Es können aber auch temporär Großkraftwerke zu- oder abgeschaltet werden, insbesondere zum Stützen des elektrischen Versorgungsnetzes spontan zu- oder abgeschaltete Gaskraftwerke, oder Pumpspeicherkraftwerke, um nur einige Beispiele zu nennen. Auch kann sich hinsichtlich der eingespeisten Wirkleistungsmenge eine Variation durch Änderung der Windbedingungen ergeben. Bspw. kann vorgesehen sein, um bei dem veranschaulichenden Beispiel der Figur 3 zu bleiben, auf der iberischen Halbinsel weitere Windparks 320, die im Moment stromprägend arbeiten, in einen spannungsprägenden oder überwiegend spannungsprägenden Betriebsmodus umzuschalten, wenn die gezeigten spannungsprägenden Windparks 330 bspw. wegen schwachen Windes weniger Wirkleistung einspeisen und damit auch weniger stark regeln können.

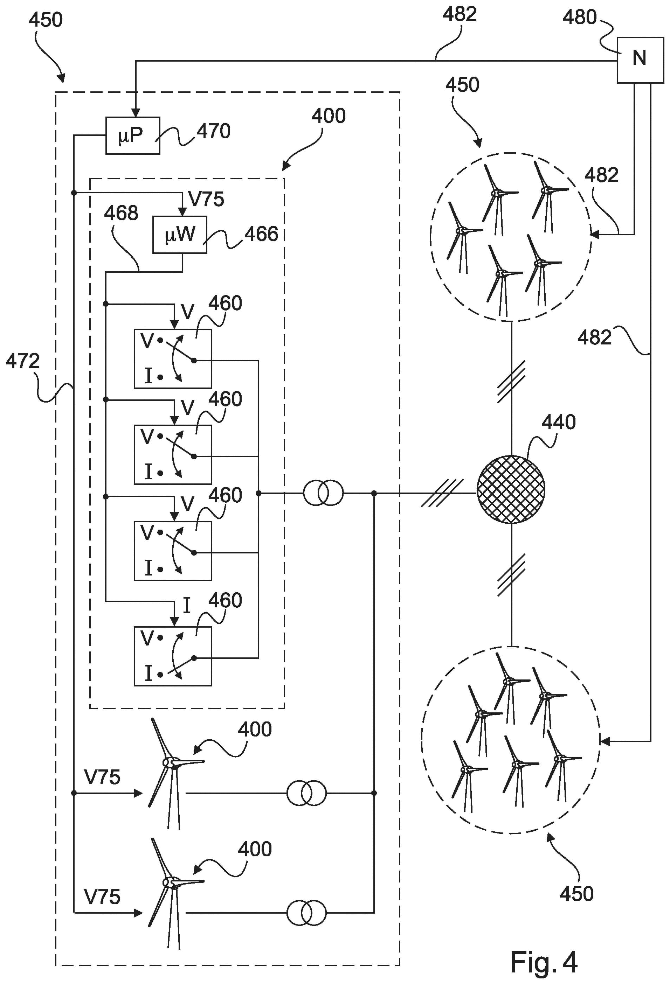

Eine Umsetzung eines solchen Gesamtkonzepts für ein elektrisches Versorgungsnetz ist in der Figur 4 veranschaulicht. Im Grunde zeigt Figur 4 schematisch nur ein elektrisches Versorgungsnetz 440, von dem im Grunde alle Elemente, die nachfolgend noch beschrieben werden, einen Teil bilden. Das elektrische Versorgungsnetz 440 ist gleichwohl in der Figur 4 auch durch ein übliches Symbol dargestellt.

Figur 4 zeigt dazu nun exemplarisch drei Windparks 450. Für alle drei Windparks ist dasselbe Bezugszeichen verwendet worden, obwohl sich diese natürlich in ihrer Art oder auch ihrem aktuellen Betriebsmodus unterscheiden können. Einer der Windparks 460, der in der linken Hälfte dargestellt ist, ist im größeren Detail dargestellt und weist exemplarisch drei Windenergieanlagen 400 auf. Diese drei Windenergieanlagen, die repräsentativ für weitere Windenergieanlagen stehen können, können bspw. baugleich sein. Zur besseren Übersichtlichkeit sind alle drei exemplarischen Windenergieanlagen mit demselben Bezugszeichen 400 gekennzeichnet. Zwei dieser Windenergieanlagen 400 sind nur als Symbol dargestellt und eine Windenergieanlage 400 ist zur Veranschaulichung der zu erläuternden Struktur als gestrichelter Block dargestellt, der exemplarisch vier Einspeiseeinheiten 460 aufweist. Jede dieser Einspeiseeinheiten 460 kann repräsentativ für einen Wechselrichter stehen, bzw. für einen Schaltschrank, der einen solchen Wechselrichter beinhaltet.

Für jede dieser Einspeiseeinheiten 460 ist eine Umschaltung zwischen stromprägenden Betriebsmodus I und spannungsprägenden Betriebsmodus V möglich. Dies ist in jeder der Einspeiseeinheiten 460 durch einen Schalter symbolisiert, der zwischen stromprägendem Betriebsmodus und I und spannungsprägenden Betriebsmodus V auswählen kann.

Exemplarisch ist hierbei bei einer der Einspeiseeinheiten 460 ein stromprägender Betriebsmodus I ausgewählt, nämlich bei der gemäß Darstellung der Figur 4 unten dargestellten Einspeiseeinheit, wohingegen die übrigen drei exemplarischen Einspeiseeinheiten 460 durch die Schalterstellung symbolisieren, dass sie im spannungsprägenden Betriebsmodus arbeiten.

Eine solche Auswahl kann durch die Windenergieanlagensteuerung 466 vorgenommen werden. Die Windenergieanlagensteuerung 466 ist dazu über einen Windenergieanlagendatenbus 468 mit jeder Einspeiseeinheiten 460 verbunden. Über diesen Windenergieanlagendatenbus 468 können entsprechende Steuerbefehle an die Einspeiseeinheiten 460 geleitet werden. Die Figur 4 zeigt dazu an, dass dieser Datenbus 468 an die ganz unten dargestellte Einspeiseeinheit 460 einen Steuerbefehl mit dem Inhalt I übersendet, also mit dem Steuerbefehl, den stromprägenden Betriebsmodus auszuwählen. Entsprechend erhalten die übrigen drei exemplarischen Einspeiseeinheiten 460 als Steuerbefehl die Information V, also den Steuerbefehl, den spannungsprägenden Betriebsmodus V auszuwählen.

Die Windenergieanlagensteuerung 466 kann dabei einen übergeordneten Steuerbefehl der Windparksteuereinheit 470 umsetzen. Die Windparksteuereinheit 470 kann dabei über einen Parkdatenbus 472 entsprechende Steuerbefehle an die einzelnen Windenergieanlagen 400 geben. In dem in Figur 4 veranschaulichten Beispiel kann der Steuerbefehl, der an die erste Windenergieanlagen 400 geht, bspw. lauten, dass zu 75 Prozent spannungsprägend gearbeitet werden soll. Es ist dort eingangsseitig der Windenergieanlagensteuerung 466 als "V75" veranschaulicht und kann für 75 Prozent spannungsprägend zu arbeiten stehen. Das gleiche Signal geht auch jeweils zu den anderen beiden Windenergieanlagen 400, nämlich das Signal V75, es können aber auch unterschiedliche Signale an die Windenergieanlagen 400 gegeben sein.

Die Windparksteuereinheit 470 erhält ihrerseits wiederum ein von einem Netzbetreiber 480 übertragenes Auswahlsignal. Dies ist nur ein Beispiel und stattdessen oder ergänzend kann der Windpark 450 bzw. die Windparksteuereinheit 470 auch aufgrund anderer Kriterien eine Umschaltung bzw. Auswahl eines entsprechenden Betriebsmodus vorsehen.

In dem veranschaulichenden Beispiel der Figur 4 ist aber vorgesehen, dass der Netzbetreiber 480 ein entsprechendes Auswahlsignal über eine Betreiberdatenverbindung 482 an die Windparks 450 überträgt. An diese Betreiberdatenverbindung 482 brauchen dabei keine hohen Anforderungen hinsichtlich Übertragungsrate gestellt zu werden, weil eine **Umschaltung** zwischen stromprägenden Betriebsmodus und spannungsprägenden Betriebsmodus bzw. einem Mischbetriebsmodus weder ständig vorgesehen ist, noch besonders zeitkritisch ist und auch nur eine geringe Datenmenge zur Übertragung benötigt.

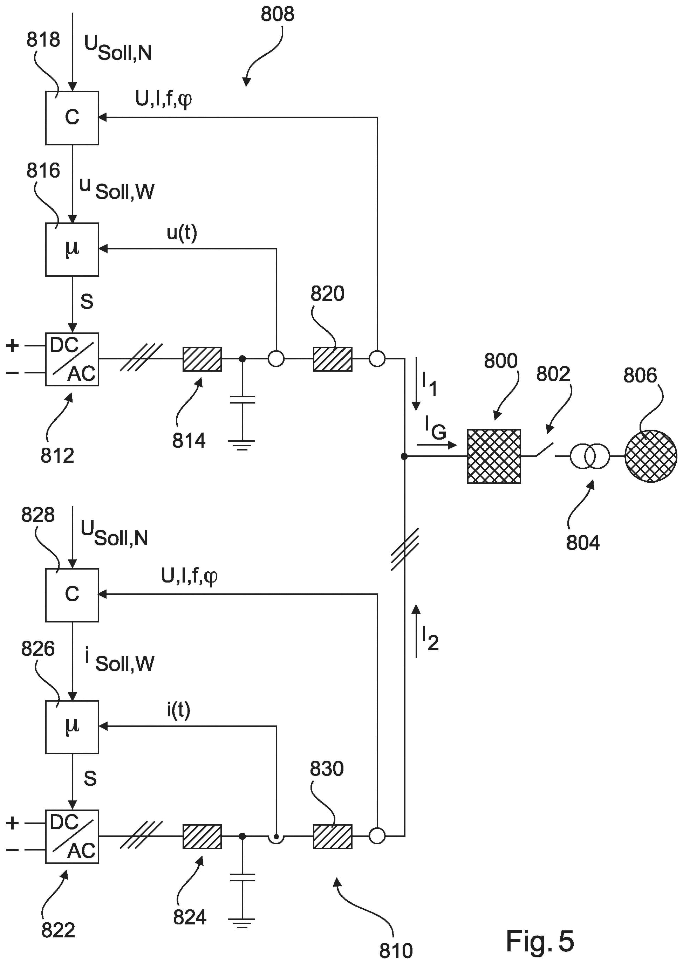

Figur 5 veranschaulicht, wie ein Umrichter oder Wechselrichter, wie also eine Einspeiseeinheit einen stromprägenden Betriebsmodus oder einen spannungsprägenden Betriebsmodus realisieren kann.

Figur 5 zeigt veranschaulichend eine Verbindungsstruktur 800, die über einen Trennschalter 802 und einen Verbindungstrafo 804 an ein elektrisches Versorgungsnetz 806 ankoppelbar ist. Die Verbindungsstruktur 800 kann bspw. eine Verbindung mehrerer strom- oder spannungsprägender Einheiten sein, die gemeinsam elektrische Leistung über die Verbindungsstruktur bereitstellen. Die Verbindungsstruktur kann bspw. eine Verknüpfung aller Leistungsschränke in einer Windenergieanlage bilden oder umfassen.

Veranschaulichend sind eine spannungsprägende Einheit 808 und eine stromprägende Einheit 810 gezeigt, die selbst auch Teil der Verbindungsstruktur 800 sind. Beide Einheiten können bspw. in einer Windenergieanlage untergebracht sein. Außerdem ist vorgesehen, dass sie umschaltbar sind, dass sie also jeweils wahlweise als spannungsprägende Einheit oder als stromprägende Einheit arbeiten können. Entsprechende Sensoren sind aber der Einfachheit halber nicht dargestellt.

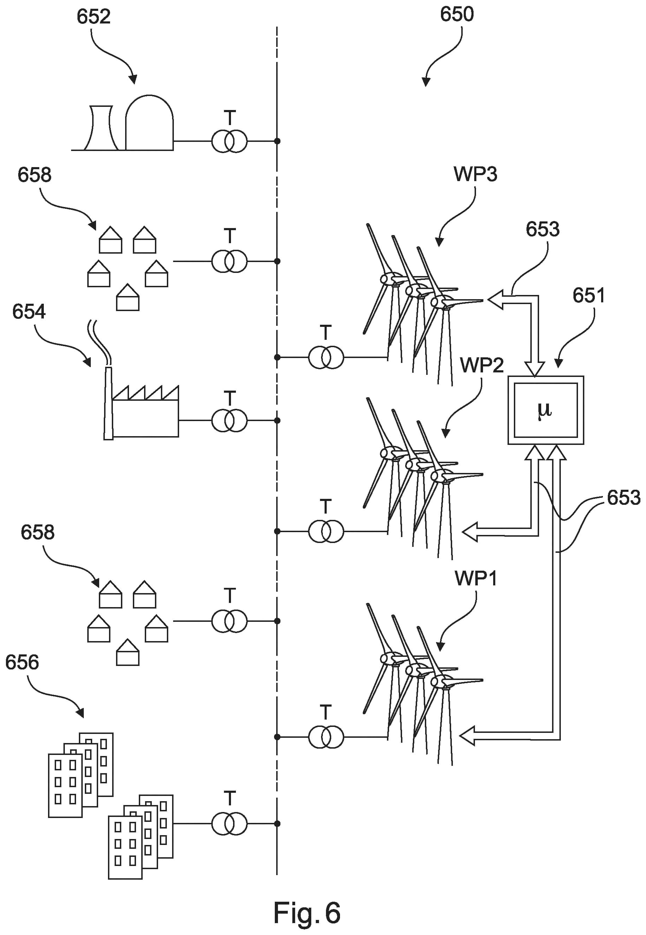

Die spannungsprägende Einheit 808 weist einen spannungsprägenden Wechselrichter 812 auf, der eine Spannung u(t) an seinem Ausgang erzeugt und die besonders am Ausgang des angedeuteten ersten Ausgangsfilters 814 gemessen wird. Die Spannung u(t) wird ständig gemessen und in den ersten Mikrocontroller 816 zurückgeführt. Der erste Mikrocontroller 816 wertet insoweit die Augenblickswerte dieser gemessenen Spannung u(t) aus. Auch diese Messwerte sind, genauso wie die ausgegebene Spannung, dreiphasig. Zur Erläuterung der Figur 6 ist es aber nicht erforderlich, auf diese Dreiphasigkeit einzugehen. Das gilt auch für die stromprägende Einheit 810.

Der erste Mikrocontroller 816 erhält außerdem einen Spannungssollwert u_{soll,w}, der die einzustellende Spannung u(t) nach Betrag, Frequenz und Phase spezifiziert.

Dieser Sollwert u_{soll,w} wird in der ersten Wechselrichtersteuerung 818 erzeugt. Er hängt ab von einer Sollspannung U_{soll,N} und den gemessenen Werten U, **I,** f, φ, die am Ausgang der ersten Netzdrossel 820 gemessen werden.

Die stromprägende Einheit 810, die stromprägend arbeitet, weist einen stromprägenden Wechselrichter 822 auf, der ähnlich wie der spannungsprägende Wechselrichter 812 arbeitet, aber auf einen Ausgangsstrom i(t) regelt. Dieser Ausgangsstrom i(t) wird am Ausgang des angedeuteten zweiten Ausgangsfilters 824 erfasst und in dem zweiten Mikrocontroller 826 ausgewertet. Der zweite Mikrocontroller 826 erhält somit einen Stromsollwert i_{soll,w}, der den zu erzeugenden Strom i(t) nach Betrag, Frequenz und Phase vorgibt. Der zweite Mikrocontroller 826 steuert entsprechend die Schalthandlungen in dem stromprägenden Wechselrichter 822, was durch das Bezugszeichen S angedeutet ist. Entsprechend steuert im Übrigen der erste Mikrocontroller 816 Schalthandlungen in dem Wechselrichter 812.

Der Stromsollwert i_{soll,w}_wird in der zweiten Wechselrichtersteuerung 828 bestimmt. Er hängt ab von der Spannung U, dem Strom I, der Frequenz f und dem Phasenwinkel φ und diese Größen werden am Ausgang der zweiten Netzdrossel 830 erfasst. Auch die zweite Wechselrichtersteuerung 828 empfängt auch noch als Eingangsgröße eine Sollspannung U_{soll,N}. Die erste und zweite Wechselrichtersteuerung 818 und 828 können auch in einer gemeinsamen Wechselrichtersteuerung zusammengefasst werden.

Die spannungsprägende Einheit 808 erzeugt somit im Ergebnis einen ersten Strom I₁ und die stromprägende Einheit 810 erzeugt im Ergebnis einen zweiten Strom I₂. Diese beiden Ströme I₁ und I₂ summieren sich zu dem gemeinsamen Strom I_{G} auf. Dieser fließt veranschaulichend in das symbolisierte Parknetz 800 ein. Das ist veranschaulichend zu verstehen, weil auch die spannungsprägende Einheit 808 und die stromprägende Einheit 810 Teil des Parknetzes 800 sind. Insoweit fließt der gemeinsame Strom I_{G} in den verbleibenden Teil des Parknetzes.

Im Betrieb, wenn beispielsweise ein Blindleistungssprung oder ein Phasensprung im Parknetz 800 auftritt, macht sich das in dem Gesamtstrom I_{G} bemerkbar. Weil der Ausgangsstrom I₂ der stromprägenden Einheit 810 von diesem geregelt wird, führt eine Änderung des gemeinsamen Stroms I_{G} somit zunächst nur zu einer Änderung des ersten Stroms I₁ der spannungsprägenden Einheit 808.

Die Änderung des gemeinsamen Stroms I_{G} hat somit zunächst zu einer Änderung des ersten Stroms I₁ geführt und das hat die erste Wechselrichtersteuerung 818 erfasst. Die erste Wechselrichtersteuerung 818 erfasst daraus in Abhängigkeit einer Blindleistungsstatik oder Wirkleistungsstatik einen neuen Wert für eine Spannungsamplitude und/oder eine Frequenz. Entsprechend wird das Spannungssollsignal u_{soll,w} angepasst und an den ersten Mikrocontroller 816 übergeben. Dieser steuert dann entsprechend den spannungsprägenden Wechselrichter 812 an. Das führt entsprechend zu einer Änderung der Spannungsamplitude und/oder der Frequenz der Spannung und das wird von der stromprägenden Einheit 810 durch die Messung am Ausgang der zweiten Netzdrossel 830 gemessen und in der zweiten Wechselrichtersteuerung 828 ausgewertet. Davon abhängig wird dann ein neuer Blindleistungswert und/oder ein neuer Wirkleistungswert berechnet, nämlich abhängig von der zugrunde liegenden Blindleistungsstatik oder Wirkleistungsstatik. Entsprechend wird ein Sollstromsignal i_{soll,w} vorgegeben und dem zweiten Mikrocontroller 826 übergeben. Dieser steuert dann den stromprägenden Wechselrichter 822 entsprechend an. Das Ergebnis ist, dass sich nun der zweite Strom I₂ ändert, wodurch sich der erste Strom I₁ auch ändert und das wiederum zu einer neuen Anpassung durch die erste Wechselrichtersteuerung 818 führt, nämlich wieder basierend auf den entsprechenden Statiken, also der Blindleistungsstatik und/oder der Wirkleistungsstatik.

Im Ergebnis werden sich somit die spannungsprägende Einheit 808 und die stromprägende Einheit 810 so aufeinander einstellen, dass sie eine entsprechende Wirk- oder Blindleistung entsprechend der für sie relevanten Statik bei gleicher Spannungsabweichung bzw. gleicher Frequenz einspeisen.

Figur 5 beschreibt den grundsätzlichen Betrieb einer spannungsprägenden Einheit 808 und einer stromprägenden und diese beiden können auch zusammen betrieben werden und in dasselbe Netz einspeisen. Es können aber auch wesentlich mehr als nur zwei Einheiten zusammenarbeiten. Jede Einheit für sich kann wie oben beschrieben arbeiten. Es wird nun vorgeschlagen, je nach Situation einen Schwerpunkt auf einen spannungsprägenden Betrieb oder einen stromprägenden Betrieb zu legen. In dem vereinfachten Beispiel der Figur 5 würde das bedeuten, dass beide Einheiten spannungsprägend bzw. beide Einheiten stromprägend arbeiten. Bei vielen Einheiten, also viel mehr als zwei Einheiten, kann es je nach Situation ausreichend sein, dass nicht alle, aber die meisten, oder zumindest Mehrzahl spannungsprägend bzw. stromprägend arbeitet.

Fig. 6 veranschaulicht einen Netzabschnitt 650 eines elektrischen Versorgungsnetzes, der ein Großkraftwerk 652, Siedlungen 658, einen industriellen Verbraucher 654, eine Stadt 656 und mehrere Windparks WP1 bis WP3 aufweist. Diese Elemente stehen jeweils auch exemplarisch für weitere Elemente ihrer Art und sind zur Veranschaulichung jeweils über einen Transformator T mit einer gemeinsamen Leitung verbunden. Jeder Windpark WP1 bis WP3 bildet eine umrichtergeführte Einspeisevorrichtung.

Mit den exemplarischen Windparks WP1 bis WP3 kann elektrische Leistung in das elektrische Versorgungsnetz 650 eingespeist werden. Diese Windparks WP1 bis WP3 arbeiten grundsätzlich stromprägend, können aber auch spannungsprägende Einspeiseeinheiten beinhalten und sie können Einspeiseeinheiten wahlweise stromprägend oder spannungsprägend betreiben. Sie können durch die Netzsteuereinrichtung 651 auch koordiniert gesteuert werden, wobei das besonders eine Steuerung von Sollwerten betrifft. Momentanwerte bzw. Augenblickswerte steuert bzw. regelt jede Windenergieanlage eigenständig. Die Netzsteuereinrichtung 651 kann auch eine Umschaltung eines oder mehrerer Windparks WP1 bis WP3 vom stromprägenden Betrieb in den spannungsprägenden Betriebsmodus steuern, oder umgekehrt. Sie kann auch einen Anteil stromprägender oder spannungsprägender Einspeiseeinheiten vorgeben und dadurch zwischen einem stromprägenden Betriebsmodus und spannungsprägenden Betriebsmodus in mehreren Schritten oder in einem fließenden Übergang ändern.

Zur Übertragung solcher Vorgaben, einschließlich der Übertragung von Sollwerten ist ein Übertragungsmittel vorgesehen, das über einen Datenübertragungskanal 653 Daten an die Windparks WP1 bis WP3 überträgt, die dort jeweils über eine Schnittstelle eingegeben werden. Jeder Windpark WP1 bis WP3 kann dazu eine zentrale Parksteuereinheit aufweisen, um die von der Netzsteuereinrichtung 651 vorgegebenen Werte auf die Windenergieanlagen des Windparks aufzuteilen. Dabei kann jede Windenergieanlage mehrere Einspeiseeinheiten aufweisen und damit kann jede Windenergieanlage auch schrittweise von einem stromprägenden Betriebsmodus auf einen spannungsprägenden Betriebsmodus wechseln.

Eine Kommunikation zwischen den Windparks WP1 bis WP3 und der Netzsteuereinrichtung 651 kann auch bidirektional erfolgen, wie die jeweilige Darstellung der Datenübertragungskanäle mit Pfeilen in beide Richtungen veranschaulicht. Die Übertragung kann kabelgebunden oder kabellos oder in Kombination aus beidem erfolgen.

Dadurch kann die Netzsteuereinrichtung 651 auch Daten des jeweiligen Windparks berücksichtigen. Dadurch kann sie bspw. Informationen zu erreichten Strombegrenzungen erhalten und auswerten. Die bidirektionale Informationsübertragung eröffnet auch die Möglichkeit, dass der Windpark als Messsensor fungiert und Messwerte des elektrischen Versorgungsnetzes 650 aufnimmt, insbesondere Spannung und Frequenz, und diese Messdaten zur weiteren Verwendung an die Netzsteuereinrichtung überträgt. Daraus können Informationen besonders über Netzzustände oder Netzeigenschaften empfangen und ausgewertet werden, um dann Kriterien zum Umschalten zwischen dem stromprägenden und dem spannungsprägenden Betriebsmodus zu berücksichtigen.

Gemäß einem Beispiel kann es vorkommen, dass ein Kraftwerk, bspw. das Kraftwerk 652, abgeschaltet wird. Dann kann dadurch ein Phasensprung und/oder eine Frequenzänderung auftreten. Das kann bspw. die Netzsteuereinrichtung 651 erfassen, oder ihr wird das als Information von einem Netzbetreiber übertragen. Dann kann die Netzsteuereinrichtung 651 den Windparks WP1 bis WP3, oder wenigstens einem davon, ein Signal geben, spannungsprägende Eigenschaften zu erhöhen. Die betroffenen Windparks können dann in einen spannungsprägenden Betriebsmodus umschalten, bzw. zu einem überwechseln, oder zumindest einen Anteil spannungsprägender Einheiten durch Umschaltung erhöhen.

Erfindungsgemäß wurde besonders erkannt, dass sich elektrische Versorgungsnetze, verändern können. Das kann bspw. das Europäische Verbundnetz betreffen, das hier beispielhaft genannt wird und vereinfachend als Verbundnetzt bezeichnet wird, auch repräsentativ für andere Verbundnetze. Durch die Substitution konventioneller Kraftwerke durch umrichterbasierte, erneuerbare Energieanlagen können dem Verbundsystem spannungsprägende Erzeuger verloren gehen.

Im ungestörten Betrieb kann das Verbundnetz u.U. mit sehr wenigen, möglichst gleichmäßig verteilten, bis gar keinen spannungsprägenden Einheiten betrieben werden.

Es wurde aber erkannt, dass im gestörten Betrieb, im Netzwiederaufbaubetrieb oder im Schwarzstartfall aber u.U. ein spannungsprägendes Verhalten notwendig sein kann, zumindest hilfreich sein kann.

Um das zu realisieren, wird vorgeschlagen, dass die Anlagen, also besonders Windenergieanlagen oder Windparks, dann abhängig von Eigenschaften des Netzes, und/oder eines Betriebspunktes der Anlagen entweder stromeinprägend oder spannungsprägend arbeiten und die Eigenschaften dynamisch umschalten.

Ein erreichbarer Vorteil dieser Lösung wäre die Vermeidung von Instabilitäten durch einen Schwarm zu vieler spannungsprägender Systeme bei gleichzeitiger Deckung des Minimalbedarfs spannungsprägender Systeme im Netz.

## Patentansprüche

1. Verfahren zum Einspeisen elektrischer Leistung in ein elektrisches Versorgungsnetz (120), an einem Netzanschlusspunkt mittels einer umrichtergeführten Einspeisevorrichtung, nämlich mittels eines Windparks (112) oder einer Windenergieanlage (100), wobei
- zur Einspeisung der elektrischen Leistung wenigstens zwischen einem stromprägenden Betriebsmodus und einem spannungsprägenden Betriebsmodus gewählt werden kann und wobei
- in dem stromprägenden Betriebsmodus im Wesentlichen oder überwiegend auf einen Stromsollwert gesteuert oder geregelt wird, und
- in dem spannungsprägenden Betriebsmodus im Wesentlichen oder überwiegend auf einen Spannungssollwert gesteuert oder geregelt wird.

2. Verfahren nach Anspruch 1,
**dadurch gekennzeichnet, dass**
ein aktueller Betriebsmodus zwischen dem stromprägenden und dem spannungsprägenden Betriebsmodus in mehreren Schritten oder in einem fließenden Übergang geändert werden kann, und dass ein Mischbetriebsmodus eingestellt werden kann, der insbesondere eine stromprägende und spannungsprägende Eigenschaft hat bzw. kombiniert.

3. Verfahren nach Anspruch 1 oder 2,
**dadurch gekennzeichnet, dass**
zwischen dem stromprägenden und dem spannungsprägenden Betriebsmodus umgeschaltet wird in Abhängigkeit wenigstens eines Kriteriums aus der Liste aufweisend
- ein Maß einer Spannungsschwankung im elektrischen Versorgungsnetz,
- ein Strombegrenzungsmaß, das ein Maß dafür ist, wie oft spannungsprägende Einheiten der umrichtergeführten Einspeisevorrichtung eine Strombegrenzung erreicht haben,
- ein Verhältnis in das elektrische Versorgungsnetz einspeisender direkt gekoppelter Synchrongeneratoren zu in das elektrische Versorgungsnetz einspeisender umrichtergeführter Einspeisevorrichtungen, wobei als Bezugsgröße insbesondere die jeweils aktuell eingespeiste Leistung, insbesondere Wirkleistung bzw. ein Verhältnis der jeweils eingespeisten Leistung bzw. Wirkleistung verwendet wird,
- ein Maß einer Frequenzschwankung im elektrischen Versorgungsnetz,
- ein Maß an Phasensprüngen im Netz,
- eine Netzeigenschaft des elektrischen Versorgungsnetzes, insbesondere eine Netzsensitivität,
- ein Betriebszustand der umrichtergeführten Einspeisevorrichtung, insbesondere die aktuell eingespeiste Leistung, insbesondere Wirkleistung in Bezug auf eine Nennleistung der umrichtergeführten Einspeisevorrichtung,
- Anteil in das elektrische Versorgungsnetz einspeisender spannungsprägender Einspeisevorrichtungen,
- Anteil in das elektrische Versorgungsnetz einspeisender Windenergieanlagen,
- Anteil in das elektrische Versorgungsnetz einspeisender Solargeneratoren,
- eine Kurzschlussleistung am Netzanschlusspunkt,
- eine Netzimpedanz am Netzanschlusspunkt,
- ein Kurzschlussstromverhältnis am Netzanschlusspunkt,
- ein Erkennen einer Teilnetzbildung, insbesondere einer Inselnetzbildung und
- ein externes Umschaltsignal oder Auswahlsignal, insbesondere ein von einem Betreiber des elektrischen Versorgungsnetzes vorgegebenes Umschaltsignal.

4. Verfahren nach einem der vorstehenden Ansprüche,
**dadurch gekennzeichnet, dass**
zum Umschalten zwischen dem stromprägenden und dem spannungsprägenden Betriebsmodus eine Umschaltsteuerung vorgesehen ist, wobei die Umschaltsteuerung
- ein Umschaltkriterium implementiert hat,
- in Abhängigkeit wenigstens eines Kriteriums gemäß Anspruch 3 umschaltet, und/oder
- einen Adaptionsalgorithmus implementiert hat, der ein Kriterium, insbesondere ein Kriterium nach Anspruch 3 verwendet und Veränderungen nach einer Umschaltung mittels eines Gütemaßes qualitativ und/oder quantitativ bewertet.

5. Verfahren nach einem der vorstehenden Ansprüche,
**dadurch gekennzeichnet, dass**
zusätzlich ein frequenzprägender Betrieb ausgewählt werden kann, in dem die umrichtergeführte Einspeisevorrichtung auf einen Frequenzsollwert steuert oder regelt, insbesondere dass zwischen dem frequenzprägenden Betrieb und einem frequenzoffenen Betriebsmodus umgeschaltet werden kann, wobei die umrichtergeführte Einspeisevorrichtung im frequenzoffenen Betriebsmodus auf eine im elektrischen Versorgungsnetz erfasste Frequenz regelt.

6. Verfahren nach einem der vorstehenden Ansprüche,
**dadurch gekennzeichnet, dass**
die umrichtergeführte Einspeiseeinrichtung an einem Spannungsausgang ein Spannungssignal ausgibt
- der Spannungsausgang mit einer Drossel beschaltet ist, so dass sich in Abhängigkeit des Spannungssignals, einer Spannung im elektrischen Versorgungsnetz und der Drossel ein Ausgangsstrom und eine Ausgangsspannung an einem Ausgang der Drossel ergeben, wobei
- im stromprägenden Betriebsmodus eine Stromregelung verwendet wird und der Ausgangsstrom als Ist-Wert zurückgeführt wird, und/oder
- im spannungsprägenden Betriebsmodus eine Spannungsregelung verwendet wird und die Ausgangsspannung als Ist-Wert zurückgeführt wird.

7. Verfahren nach einem der vorstehenden Ansprüche,
**dadurch gekennzeichnet, dass**
- eine Umschaltung oder Auswahl zwischen dem spannungsprägenden Betriebsmodus und dem stromprägenden Betriebsmodus durch eine computerimplementierte Steuerung realisiert wird, insbesondere, dass
- eine Erfassung zur Rückführung eines bzw. des Ausgangsstroms und einer bzw. der Ausgangsspannung dauerhaft erfolgt und durch die computerimplementierte Steuerung zwischen dem erfassten Ausgangsstrom und der erfassten Ausgangsspannung als zurückgeführten Ist-Wert gewählt werden kann und/oder
- die umrichtergeführte Einspeisevorrichtung wenigstens einen Umrichter aufweist, um das Spannungssignal durch ein Pulsmuster als gepulstes Spannungssignal zu erzeugen und wobei das Pulsmuster in Abhängigkeit des gewählten Betriebsmodus und des zurückgeführten Ist-Wertes erzeugt wird.

8. Verfahren nach einem der vorstehenden Ansprüche,
**dadurch gekennzeichnet, dass**
- als Stromsollwert oder Spannungssollwert ein Stromband bzw. Spannungsband vorgegeben wird.

9. Einspeisevorrichtung, nämlich Windenergieanlage (100) oder Windpark (112), zum Einspeisen elektrischer Leistung in ein elektrisches Versorgungsnetz (120) an einem Netzanschlusspunkt (118), umfassend
- wenigstens einen Umrichter oder Wechselrichter (808, 810) zum Durchführen des Einspeisens, so dass die Einspeisevorrichtung umrichtergeführt arbeitet,
- wenigstens eine Umschaltsteuerung (466) zum Umschalten zwischen einem stromprägenden und einem spannungsprägenden Betriebsmodus, wobei
- in dem stromprägenden Betriebsmodus auf einen Stromsollwert gesteuert oder geregelt wird, und
- in dem spannungsprägenden Betriebsmodus auf einen Spannungssollwert gesteuert oder geregelt wird.

10. Einspeisevorrichtung nach Anspruch 9,
**dadurch gekennzeichnet, dass**
ein Verfahren nach einem der Ansprüche 1 bis 8 ausgeführt wird.
